# EUROPÄISCHE PATENTSCHRIFT

(11) **EP 0 836 557 B1**
(45) Veröffentlichungstag und Bekanntmachung des Hinweises auf die Patenterteilung: **12.05.1999**
(21) Anmeldenummer: 96923858.3
(22) Anmeldetag: 17.07.1996
(51) Int. Cl.: B60B 3/14

(54) **RADADAPTER AUS LEICHTMETALL MIT MONTAGEHILFSMITTEL**
WHEEL ADAPTER MADE OF LIGHT METAL WITH MOUNTING AID
ADAPTATEUR DE ROUE EN METAL LEGER AVEC ELEMENTS AUXILIAIRES DE MONTAGE

(30) Priorität: 18.07.1995 DE 19526193
(43) Veröffentlichungstag der Anmeldung: 22.04.1998
(73) Patentinhaber: Widmann, Roland, 88525 Dürmentingen (DE)
(72) Erfinder: Widmann, Roland, 88525 Dürmentingen (DE)
(74) Vertreter: König, Beate, Dipl.-Phys. Dr.
(86) Internationale Anmeldenummer: DE9601296
(87) Internationale Veröffentlichungsnummer: WO9703849

(56) Entgegenhaltungen:
- DE-A- 4 007 547
- DE-A- 4 225 903
- DE-U- 9 005 110
- FR-A- 2 569 617
- US-A- 3 857 611

## Beschreibung

Die Erfindung betrifft einen Radadapter aus Leichtmetall mit Montagehilfsmittel für in Bohrungen wie Sacklöchern angebrachte Radbolzen, die mit fehlendem Kreissegment in der Kopffläche ausgebildet sind.

Aus der DE 42 25 903 C2 ist ein Radadapter zur Anpassung an Aufnahmefelgen mit unterschiedlicher Einpreßtiefe bekannt, wobei der Radadapter mit der radialen Außenform an die eine größere Einpreßtiefe aufweisende Felge angepaßt ist. Auf diese Weise entfallen die Kosten für das Mitführen eines zweiten Reserverades bei einem Lastzug mit verschiedenartigen Rädern und Reifen. Dieser Radadapter ist so ausgebildet, daß Originalanschlußmittel verwendet werden können. Zu diesem Zweck ist er als Ringteil ausgebildet, das mit ersten und zweiten axialen Sacklöchern versehen ist, von denen die ersten Sacklöcher zur Nabe und die zweiten Sacklöcher zur Felge hin offen sind. Am Boden weisen sie jeweils Durchgangsbohrungen auf. Die Sacklochtiefen sind entsprechend der gewünschten Adapterbreite gewählt, und der Boden der zweiten Sacklöcher weist eine Stärke entsprechend der Felgenflanschdicke auf.

Zur Verbesserung der Handhabung, verbunden mit deutlich verringertem Gewicht, wird der Radadapter vorzugsweise aus Leichtmetall, wie beispielsweise Aluminium hergestellt. Dies ist indessen nur unter Verwendung außerordentlich teurer Spezialbolzen möglich. Bei Verwendung handelsüblicher Radbolzen mit fehlendem Kreissegement in der Kopffläche, die sie gegen Verdrehung sichert, ist die Auflagefläche zu klein, um den entstehenden Druck ausreichend auf den Sacklochboden des Radadapters zu übertragen. Bei Verwendung von Radbolzen mit Vollkopf kommt es indessen im Bereich der üblichen Schaftverrippung zu einem Fließen von Aluminium aufgrund der unterschiedlichen Wärmeausdehnungseigenschaften. Ein weiteres Problem stellt sich in der Gewährleistung einer ausreichenden Drehsicherung des Bolzen, die andererseits eine Demontage des Radadapters noch ermöglicht.

Der Erfindung liegt die Aufgabe zugrunde, einen Radadapter aus Leichtmetall, insbesondere der eingangs beschriebenen Art, betriebssicher und montagefreundlich auszugestalten.

Diese Aufgabe ist erfindungsgemäß bei einem Radadapter mit den Merkmalen des Anspruchs 1 gelöst. Vorteilhafte Weiterbildungen des erfindungsgemäßen Radadapters sind Gegenstand der Unteransprüche.

Ein erfindungsgemäßer Radadapter aus Leichtmetall mit Montagehilfsmittel für in Bohrungen wie Sacklöchern angebrachte Bolzen, die mit fehlendem Kreissegement in der Kopffläche ausgebildet sind, hat somit einen Sacklochdurchmesser, der größer als der Sacklochdurchmesser von Radadaptern beispielsweise aus Stahl ist. Zwischen dem Kopf des Radbolzens und dem Sacklochboden ist eine Scheibe aus druckfestem Material vorgesehen, deren Durchmesser dem vergrößerten Durchmesser der betreffenden Sacklochbohrungen des Radadapters angepaßt ist, um eine größere Kontaktfläche zu erzielen. Außerdem ist eine Drehsicherung für die Scheibe vorgesehen.

Dadurch, daß der Durchmesser der Sacklochbohrungen und damit auch der Scheibe vergrößert ist, wird der Druck des Radbolzenkopfes auf eine größere Fläche verteilt, so daß es nicht zu dem nachteiligen Fließen des Leichmetallmaterials kommt. Erst die gleichmäßige Auflagefläche der Scheibe ermöglicht eine wirksame Kraftverteilung am Sacklochboden, der nach dem Gießen bearbeitet werden muß.

Vorzugsweise weist die Scheibe auf der dem Kopf des Radbolzens zugewandten Seite einen Anschlagvorsprung auf. Dieser ist beispielsweise als vorstehendes Segment, insbesondere Kreissegment, ausgebildet. Es sind jedoch auch andere Flächenausbildungen möglich, die den Bolzen gegen Verdrehung in bezug auf die Scheibe sichern.

Als Drehsicherung für die Scheibe ist in dieser zweckmäßig eine Bohrung vorgesehen, in die beispielsweise ein Drehsicherungsstift von der Sacklochbohrung her hineinreicht. Durch diese Bohrung oder das betreffende Loch kann auch ein Schwerspannstift oder dergleichen zur Sicherung eingesetzt werden, so daß dieser mit dem Adapter eine Verbindung herstellt. Der Drehsicherungsstift kann z.B. in Querrichtung durch die Wandung der Sacklochbohrung in die Scheibe eingesetzt werden. Vorzugsweise wird ein solcher Schwerspannstift von der Stirnseite des Radadapters, also dem Sacklochboden, eingebracht und fluchtet mit dem Loch der Scheibe.

Eine weitere Verbesserung der Sicherung kann dadurch erzielt werden, daß die Bohrung oder das Loch der Scheibe außerhalb des Bereichs des Anschlagvorsprungs vorgesehen ist, sich somit nicht im überstehenden Flächenteil befindet. Auf diese Weise ist der Drehsicherungsstift wiederum durch den Bolzenkopf gegen Herausfallen gesichert.

Bei Kombination der Bohrung mit einem Anschlagvorsprung der Scheibe entfallen die Angriffskräfte des Radbolzens auf den Drehsicherungsstift, der somit weniger stark belastet wird, und das Problem eines Abscherens des Drehsicherungsstiftes an den Scheibenaußenflächen entfällt.

Als Drehsicherung können auch am Außenumfang der Scheibe eine oder mehrere Nuten oder Ausnehmungen und an der Innenwandung der Sacklochbohrung eine oder mehrere Erhebungen oder Vorsprünge angebracht sein oder umgekehrt. Dies ermöglicht die Durchführung einer einfachen Drehsicherung durch Einsetzen des Bolzens in die Sacklochbohrung, wobei der jeweilige Vorsprung entlang der Nut in dieser verschoben wird.

Eine alternative Ausgestaltung einer Drehsicherung für die Scheibe besteht darin, daß diese an ihrer Unterseite einen Vorsprung aufweist und am Boden der Sacklochbohrung eine entsprechende Vertiefung vorgesehen ist. Zweckmäßig ist der Vorsprung ein Steg und die Vertiefung eine Nut.

Die Erfindung wird im folgenden weiter anhand der Zeichnung und zweier Ausführungsbeispiele beschrieben. Diese Darstellung ist indessen nicht als die Erfindung einschränkend anzusehen, sondern dient lediglich zu Erläuterungszwecken. In der Zeichnung zeigen:
- Fig. 1: einen Schnitt durch eine Sacklochbohrung eines erfindungsgemäßen Radadapters mit Scheibe und eingesetztem Radbolzen,
- Fig. 2: eine Draufsicht der Scheibe von Figur 1,
- Fig. 3: eine Seitenansicht der Scheibe von Figur 1 und
- Fig. 4: eine Seitenansicht einer weiteren Ausführungsform der Scheibe.

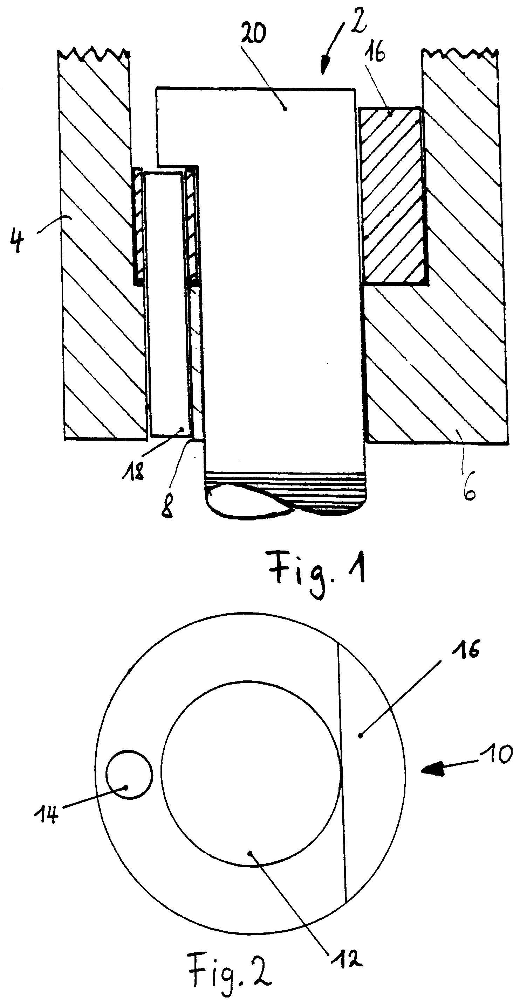

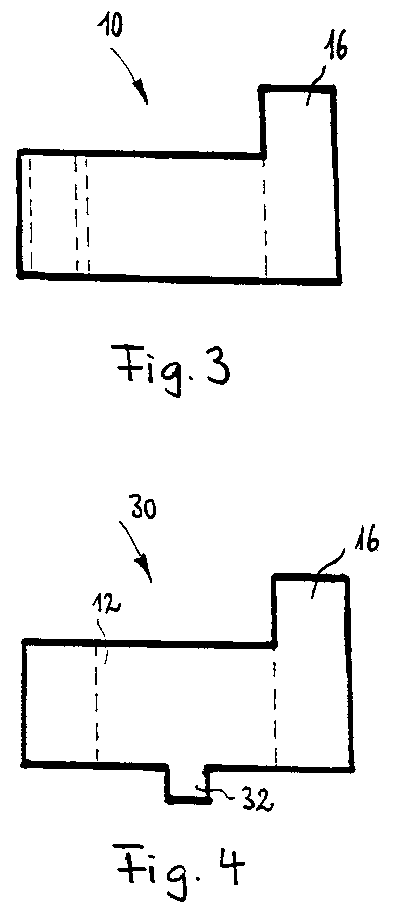

Im folgenden wird die Erfindung zunächst anhand von Fig. 1 bis 3 beschrieben. In Fig. 1 ist schematisch eine Schnittansicht einer Sacklochbohrung 2 mit zylindrischer Wandung 4 und Boden 6 dargestellt, die zur Felge gerichtet ist. Der Boden 6 weist eine Bohrung bzw. ein Loch 8 auf. Auf dem Boden 6 liegt eine Scheibe 10, die in Fig. 2 und 3 in Draufsicht und Seitenansicht gezeigt ist. Die Scheibe 10 weist eine zentrale Bohrung oder ein Loch 12 auf, das für die Durchführung eines Radbolzens 20 vorgesehen ist. Außerdem ist die Scheibe mit einem radial weiter außen befindlichen Loch 14 oder ggf. Bohrung versehen, das für die Durchführung eines Drehsicherungsstiftes 18 vorgesehen ist. Die Scheibe 10 weist auf ihrer in der Sacklochbohrung 2 oberen Seite einen Vorsprung in Form eines überstehenden Kreissegments 16 auf, das als Drehsicherung für den Bolzen dient. Der in Fig. 1 gezeigte Radbolzen 20 ist ein Serienbolzen mit asymmetrisch ausgebildetem Kopf.

Der Aufbau der beschriebenen Anordnung ist sehr einfach, so daß die Montage eines erfindungsgemäßen Radadapters auch unter ungünstigen Umgebungsbedingungen gut und schnell möglich ist. Wird ein ausreichender Reibschluß durch entsprechende Dimensionierung des Lochs 12 in bezug auf den Radbolzen 20 vorgesehen, so können der Radbolzen und die Scheibe 10 zusammen in einem in die Sacklochbohrung eingeschoben werden. In diesem Fall ist es dann erforderlich, vorab bereits den Drehsicherungsstift, zweckmäßig einen Schwerspannstift, in das Loch 8 des Bodens 6 oder in das Loch 14 der Scheibe 10 einzusetzen. Die Einheit von Scheibe 10 und Radbolzen 20 wird dann aufgesetzt und in erforderlichem Maße eingeschlagen. Es ergibt sich eine sehr sichere Montage für den Radadapter, die zugleich jedoch auch wieder leicht lösbar ist.

Eine alternative Ausgestaltung ohne Verwendung eines Drehsicherungsstiftes ergibt sich bei einer Scheibe gemäß Fig. 4. Die dort dargestellte Scheibe hat wiederum das zentrale Loch 12 und den vorstehenden Bereich 16. Als Drehsicherung ist eine Rippe 32 am Boden der Scheibe vorgesehen, die in eine entsprechende Nut am Boden 6 der Sacklochbohrung eingreift. In diesem Fall muß für eine Herausfallsicherung eines verwendeten Stifts keine Sorge getragen werden, und es ergeben sich weniger Teile.

Eine weitere alternative Ausgestaltung des erfindungsgemäßen Radadapters ergibt sich daraus, daß die Scheibe eben ausgeführt ist und durch das Loch 14 in der Scheibe 10 ein so langer Stift eingebracht ist, daß dieser sowohl durch das Loch 8 im Sacklochboden 18 als auch durch die Scheibe im Loch 14 durchtritt und aus der Scheibe 10 so weit herausragt, daß er den Bolzen 20 an seiner fehlenden Kreissegmentfläche gegen Verdrehung sichert. Diese Ausführung bringt jedoch den Nachteil von zwei Scherflächen und einer Biegewirkung auf den Stift mit sich.

## Patentansprüche

1. Radadapter aus Leichtmetall mit Montagehilfsmittel für in Bohrungen wie Sacklöchern (2) angebrachte Radbolzen (20), die mit fehlendem Kreissegment in der Kopffläche ausgebildet sind, dadurch **gekennzeichnet,** daß
- der Durchmesser der Sacklochbohrungen (2) gegenüber dem für die verwendeten Radbolzen (20) üblichen Durchmesser der Sacklochbohrungen eines Radadapters aus Stahl vergrößert ist,
- eine Scheibe (10) aus druckfestem Material vorgesehen ist, die zwischen dem Kopf des Radbolzens (20) und dem Sacklochboden (6) angeordnet wird,
- wobei der Durchmesser der Scheibe (10) dem vergrößerten Durchmesser der betreffenden Sacklochbohrungen des Radadapters angepaßt ist, um eine größere Kontaktfläche zu erzielen, und
- eine Drehsicherung (14, 18; 32) für die Scheibe vorgesehen ist.

2. Radadapter nach Anspruch 1, dadurch **gekennzeichnet,** daß die Scheibe (10) auf der dem Kopf des Radbolzens (2) zugewandten Seite einen Anschlagvorsprung (16) aufweist.

3. Radadapter nach Anspruch 2, dadurch **gekennzeichnet,** daß als Anschlagvorsprung (16) ein vorstehendes Segment, insbesondere Kreissegment, der Scheibe (10) vorgesehen ist.

4. Radadapter nach einem der Ansprüche 1 bis 3, dadurch **gekennzeichnet,** daß als Drehsicherung für die Scheibe in dieser eine Bohrung oder ein Loch (14) vorgesehen ist, in die sich ein Drehsicherungsmittel (18), insbesondere Drehsicherungsstift, von der Sacklochbohrung her erstreckt.

5. Radadapter nach Anspruch 4, dadurch **gekennzeichnet,** daß das Loch (14) der Scheibe (10) für den Drehsicherungsstift außerhalb des Bereichs des Anschlagvorsprungs (16) vorgesehen ist.

6. Radadapter nach einem der Ansprüche 1 bis 3, dadurch **gekennzeichnet,** daß als Drehsicherung für die Scheibe (10) an deren Unterseite ein Vorsprung (32) und auf dem Boden der Sacklochbohrung (2) eine entsprechende Vertiefung vorgesehen ist.

7. Radadapter nach Anspruch 6, dadurch **gekennzeichnet,** daß der Vorsprung (32) ein Steg und die Vertiefung eine Nut ist.

8. Radadapter nach einem der Ansprüche 1 bis 7, dadurch **gekennzeichnet,** daß das zentrale Loch der Scheibe für den Radbolzen so bemessen ist, daß sich ein Reibschluß ergibt.

9. Radadapter nach einem der Ansprüche 4 bis 8, dadurch **gekennzeichnet,** daß sich der Drehsicherungsstift durch ein Loch des Sacklochbodens und die Bohrung oder das Loch der Scheibe erstreckt und über die Scheibe als Anschlag für einen Anschlagvorsprung von dieser vorsteht.

10. Radadapter nach einem der Ansprüche 1 bis 3, 6 bis 8, dadurch **gekennzeichnet,** daß als Drehsicherung am Außenumfang der Scheibe eine oder mehrere Ausnehmungen oder Nuten und an der Innenwandung der Sacklockbohrung eine oder mehrere Erhebungen oder Vorsprünge angebracht sind oder umgekehrt.

11. Radadapter nach einem der Ansprüche 1 bis 10, dadurch **gekennzeichnet,** daß der Radbolzen und die Scheibe einstückig ausgeführt sind.

## Claims

1. Wheel adapter of light metal with fitting aid, for wheel bolts (20) fitted in bores such as blind-end bores (2), the wheel bolts being made with a missing segment of a circle in the head surface, characterised in that
- the diameter of the blind-end bores (2) is enlarged in comparison with the diameter of the blind-end bores usually provided for the wheel bolts (20) used in the case of a wheel adapter of steel,
- a disc (10) of compression-resistant material is provided which is arranged between the head of the wheel bolt (20) and the bottom (6) of the blind-end bore,
- wherein the diameter of the disc (10) is matched to the enlarged diameter of the associated blind-end bore of the wheel adapter in order to achieve a greater contact surface area, and
- a rotation preventer (14, 18; 32) is provided for the disc.

2. Wheel adapter according to claim 1, characterised in that the disc (10) has a stop projection (16) on the side facing the head of the wheel bolt (2).

3. Wheel adapter according to claim 2, characterised in that a projecting segment, particularly a segment of a circle, of the disc (10) is provided as the stop projection (16).

4. Wheel adapter according to one of claims 1 to 3, characterised in that a bore or a hole (14) is provided in the disc as rotation preventer for the disc, into which bore or hole a rotation prevention means (18), particularly rotation prevention pin, extends from the blind-end bore.

5. Wheel adapter according to claim 4, characterised in that the hole (14) in the disc (10) for the rotation prevention pin is provided outside the region of the stop projection (16).

6. Wheel adapter according to one of claims 1 to 3, characterised in that, as rotation preventer for the disc (10), a projection (32) is provided at the underside of the disc and a corresponding recess is provided in the bottom of the blind-end bore (2).

7. Wheel adapter according to claim 6, characterised in that the projection (32) is a rib and the recess is a groove.

8. Wheel adapter according to one of claims 1 to 7, characterised in that the central hole in the disc for the wheel bolt is so dimensioned that it results in a friction fit.

9. Wheel adapter according to one of claims 4 to 8, characterised in that the rotation prevention pin extends through a hole in the bottom of the blind-end bore and through the bore or the hole in the disc and projects beyond the disc as a stop for a stop projection.

10. Wheel adapter according to one of claims 1 to 3, 6 to 8, characterised in that, as rotation preventer, on the external periphery of the disc there are provided one or more recesses or grooves and on the internal wall of the blind-end bore there are provided one or more raised areas or projections, or vice versa.

11. Wheel adapter according to one of claims 1 to 10, characterised in that the wheel bolt and the disc are made as one piece.

## Revendications

1. Adaptateur de roue en métal léger avec éléments auxiliaires de montage pour des boulons de roue (20) montés dans des perçages, tels que des trous borgnes (2), qui présentent une surface de tête à laquelle il manque un segment de cercle, caractérisé par le fait
- que le diamètre des trous borgnes (2) est augmenté par rapport au diamètre de trou habituel pour les boulons de roue (20) utilisés d'un adaptateur de roue en acier,
- qu'une rondelle (10) en un matériau résistant à l'écrasement est prévue, laquelle rondelle est placée entre la tête du boulon de roue (20) et le fond (6) du trou borgne,
- le diamètre de la rondelle (10) étant adapté au diamètre augmenté du trou borgne concerné de l'adaptateur de roue afin d'obtenir une plus grande surface de contact et
- qu'un freinage en rotation (14, 18; 32) de la rondelle est prévu.

2. Adaptateur de roue selon la revendication 1, caractérisé par le fait que la rondelle (10) présente une saillie de butée (16) sur sa face tournée vers la tête du boulon de roue (2).

3. Adaptateur de roue selon la revendication 2, caractérisé par le fait qu'il est prévu comme saillie de butée (16) un segment formant saillie, en particulier un segment de cercle, de la rondelle (10).

4. Adaptateur de roue selon une des revendications 1 à 3, caractérisé par le fait qu'il est prévu comme freinage en rotation de la rondelle (10), dans celle-ci, un perçage ou un trou (14) dans lequel s'engage un moyen de freinage en rotation (18), en particulier une goupille de freinage en rotation, qui fait saillie hors du trou borgne.

5. Adaptateur de roue selon la revendication 4, caractérisé par le fait que le trou (14) pour la goupille de freinage en rotation, dans la rondelle (10), est prévu en dehors de la zone de la saillie de butée (16).

6. Adaptateur de roue selon une des revendications 1 à 3, caractérisé par le fait qu'il est prévu comme freinage en rotation de la rondelle (10), sur la face inférieure de celle-ci, une saillie (32), et dans le fond du trou borgne (2) une cavité correspondante.

7. Adaptateur de roue selon la revendication 6, caractérisé par le fait que la saillie (32) est une nervure et la cavité une rainure.

8. Adaptateur de roue selon une des revendications 1 à 7, caractérisé par le fait que le trou central de la rondelle pour le boulon de roue est dimensionné de manière à obtenir une liaison par frottement.

9. Adaptateur de roue selon une des revendications 4 à 8, caractérisé par le fait que la goupille de freinage en rotation s'étend à travers un trou dans le fond du trou borgne et à travers le perçage ou le trou de la rondelle et dépasse par rapport à la rondelle pour former une butée pour une saillie de butée.

10. Adaptateur de roue selon une des revendications 1 à 3, 6 à 8, caractérisé par le fait que comme freinage en rotation un ou plusieurs évidements ou rainures est/sont aménagé(s) sur la surface extérieure de la rondelle et une ou plusieurs surélévations ou saillies sont aménagée(s) sur la paroi interne du trou borgne ou inversement.

11. Adaptateur de roue selon une des revendications 1 à 10, caractérisé par le fait que le boulon de roue et la rondelle forment un ensemble monobloc.
